(19) Europäisches Patentamt
European Patent Office
Office européen des brevets

(11) **EP 3 822 880 A1**

(12) **EUROPEAN PATENT APPLICATION**
published in accordance with Art. 153(4) EPC

(43) Date of publication:
**19.05.2021 Bulletin 2021/20**

(51) Int Cl.:
***G06Q 10/04*** (2012.01)

(21) Application number: **19877422.6**

(86) International application number:
**PCT/CN2019/107945**

(22) Date of filing: **25.09.2019**

(87) International publication number:
**WO 2020/082973 (30.04.2020 Gazette 2020/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **22.10.2018 CN 201811227348**

(71) Applicant: **Ennew Digital Technology Co., Ltd.**
**Langfang, Hebei 065001 (CN)**

(72) Inventors:
• **HUANG, Xin**
  **Langfang, Hebei 065001 (CN)**
• **LIU, Shengwei**
  **Langfang, Hebei 065001 (CN)**

(74) Representative: **Petculescu, Ana-Maria**
**Bayramoglu Law Offices LLC Türkiye**
**Irtibat Ofisi, Mira Office, Kanuni Sultan Süleyman Boulevard, 5387. street**
**Beytepe, floor 12, no:50**
**06800 Cankaya, Ankara (TR)**

(54) **LOAD PREDICTION METHOD AND APPARATUS BASED ON NEURAL NETWORK**

(57) Disclosed are a load prediction method and apparatus based on a neural network. The method comprises: receiving a time period to be predicted (S202); inputting the time period into a neural network model for predicting an energy load, wherein the neural network model is a radial-basis neural network obtained by means of training based on a hybrid particle swarm optimization algorithm (S204); and using the neural network model to predict an energy load value in the time period (S206). The method solves the technical problem in the prior art of low accuracy when a single load prediction algorithm is used for predicting an energy load.

FIG. 2

EP 3 822 880 A1

**Description**

**TECHNICAL FIELD**

The present disclosure relates to the field of communication, and in particular, to a load prediction method and apparatus based on a neural network.

**BACKGROUND**

In the prior art, energy (such as steam) supply users are divided into industrial, commercial, residential, and office users, etc. Steam loads, load magnitudes, and load characteristics of different users are different. The accuracy of load prediction is related to optimal scheduling and an operation strategy. Energy prediction ahead of time can ensure actual users of the users and reduce a waste of energy.

In the prior art, there are many load prediction methods, such as exponential smoothing, Arima, neural network, etc., but a single load forecasting algorithm has poor prediction accuracy and large prediction deviation, which is not conducive to the later scheduling optimization.

For the above problems existing in the prior art, no effective solutions have been found.

**SUMMARY**

Embodiments of the present disclosure provide a load prediction method and apparatus based on a neural network.

According to an embodiment of the present disclosure, a load prediction method based on a neural network is provided, including:

receiving a time period to be predicted;

inputting the time period into a neural network model for predicting an energy load, wherein the neural network model is a radial basis function (RBF) neural network obtained by means of training based on a hybrid particle swarm optimization algorithm; and

using the neural network model to predict an energy load value in the time period.

Optionally, before inputting the time period into a neural network model for predicting an energy load, the method further includes:

acquiring the neural network model from a third party; and

obtaining the neural network model by training sample data.

Optionally, obtaining the neural network model by training sample data includes:

determining topology of an initial model, wherein the topology includes: an input layer, a hidden layer, and an output layer;

encoding parameters of the initial model to obtain an initial particle population, wherein the parameters include: a center parameter of a radial basis function, a variance parameter, a weight parameter of the hidden layer, and a weight parameter of the output layer, and each parameter is one particle;

decoding the initial particle population to obtain initial parameters of the initial model;

assigning the initial parameters to the initial model to obtain an RBF network model; and

optimizing the RBF network model by using a training sample and a test sample.

Optionally, optimizing the RBF network model by using a training sample and a test sample includes:

inputting the training sample and the test sample into the RBF network model respectively to obtain a test value and an expected value;

selecting a norm of an error matrix consisting of the predicted value and the expected value as a fitness value; and

updating particles in the population by using the fitness value.

Optionally, updating particles in the population by using the fitness value includes:

updating velocities and positions of the particles in the population;

updating an individual extremum of the particles in the population by using the fitness value, and updating a population extremum of the particles in the population by using the fitness value; and

mutating the particles in the population, and updating the particles when a fitness value of a new particle is better than that of an old particle.

Optionally, updating velocities and positions of the particles in the population includes:

iteratively updating the velocities and the positions of the particles in the population by using the following formulas:

$$V_{id}^{k+1} = wV_{id}^{k} + c_1 r_1 (P_{id}^{k} - X_{id}^{k}) + c_2 r_2 (P_{gd}^{k} - X_{id}^{k}) ;$$

$$X_{id}^{k+1} = X_{id}^{k} + V_{k+1,id} ;$$

where $X_i = (x_{i1}, x_{i2}, ........ x_{iD})$ denotes a population particle with D dimensions, $V_i = (v_{i1}, v_{i2}, ........ v_{iD})$ denotes the velocity of a population particle with D dimension, $P_i = (p_{i1}, p_{i2}, ....... p_{iD})$ denotes an extremum of an individual particle with D dimensions, $P_g = (p_{g1}, p_{g2}, .... p_{gD})$ denotes a population extremum with D dimensions, w is an inertia weight, d=1, 2, ... D, i=1, 2, ... n, k is a current iteration number, $V_{id}$ is a particle velocity, $c_1$ and $c_2$ are nonnegative constants and are acceleration factors, and ri and r2 are random numbers distributed in [0,1].

According to another embodiment of the present disclosure, a load prediction apparatus based on a neural network is provided, including:

a receiving module configured to receive a time period to be predicted;
an input module configured to input the time period into a neural network model for predicting an energy load, wherein the neural network model is a radial basis function (RBF) neural network obtained by means of training based on a hybrid particle swarm optimization algorithm; and
a prediction module configured to use the neural network model to predict an energy load value in the time period.

Optionally, the apparatus further includes:

a determination module configured to, before the input module inputs the time period into a neural network model for predicting an energy load, determine topology of an initial model, wherein the topology includes: an input layer, a hidden layer, and an output layer;
an encoding module configured to encode parameters of the initial model to obtain an initial particle population, wherein the parameters include: a center parameter of a radial basis function, a variance parameter, a weight parameter of the hidden layer, and a weight parameter of the output layer, and each parameter is one particle;
a decoding module configured to decode the initial particle population to obtain initial parameters of the initial model;
an assignment module configured to assign the initial parameters to the initial model to obtain an RBF network model; and
an optimization module configured to optimize the RBF network model by using a training sample and a test sample.

According to a further embodiment of the present disclosure, a storage medium is further provided, a computer program is stored in the storage medium, and the computer program is configured to perform, when run, steps in any one of the above method embodiments.

According to a further embodiment of the present disclosure, an electronic device is further provided, including a memory and a processor, wherein a computer program is stored in the storage medium, and the processor is configured to run the computer program to perform steps in any one of the above method embodiments.

Through the present disclosure, a radial basis function neural network obtained by training based on a hybrid particle swarm optimization algorithm is used to predict an energy load value, and an optimal initial weight and offset of a neural network model are optimized by introducing a hybrid particle swarm and the radial basis function neural network that have the advantages of strong generalization capability and high network approximation accuracy, which solves the technical problem in the prior art of low accuracy when a single load prediction algorithm is used for predicting an energy load, reduces a prediction deviation, and improves the accuracy of energy load prediction.

**BRIEF DESCRIPTION OF THE DRAWINGS**

The accompanying drawings described herein are used to provide further understanding of the present disclosure and form a part of the present application. Illustrative embodiments of the present disclosure and descriptions thereof are used to interpret the present disclosure and do not constitute undue limitations on the present disclosure. In the drawings,

FIG. 1 is a block diagram of a hardware structure of a load prediction network terminal based on a neural network according to an embodiment of the present disclosure;
FIG. 2 is a flowchart of a load prediction method based on a neural network according to an embodiment of the present disclosure; and
FIG. 3 is a structural block diagram of a load prediction apparatus based on a neural network according to an embodiment of the present disclosure.

**DETAILED DESCRIPTION OF THE EMBODIMENTS**

To make those skilled in the art better understand the solution of the present disclosure, the technical solution in the embodiments of the present disclosure will be clearly and fully described below with reference to the accompanying drawings in the embodiments of the present disclosure. It is obvious that the embodiments to be described are only a part rather than all of the embodiments of the present disclosure. All other embodiments derived by those of ordinary skill in the art based on the embodiments of the present disclosure without creative efforts should fall within the protection scope of the present disclosure.

It should be noted that, the terms "first", "second", and so on in the specification, claims, and the accompanying drawings of the present disclosure are used to distinguish similar objects, but not necessarily to describe a particular order or sequence. It should be understood that, such data used can be interchanged under appropriate circumstances, so that the embodiments of the present disclosure described herein could be implemented in an order other than the content illustrated or described herein. In addition, the terms "comprise/include" and "have" as well as their any variations are intended to cover non-exclusive inclusion, for example, a process, method, system, product or device including a series of steps or units need not be limited to the steps or units clearly listed, but may include other steps or units not clearly listed or inherent to the process, method, product or device.

Embodiment 1

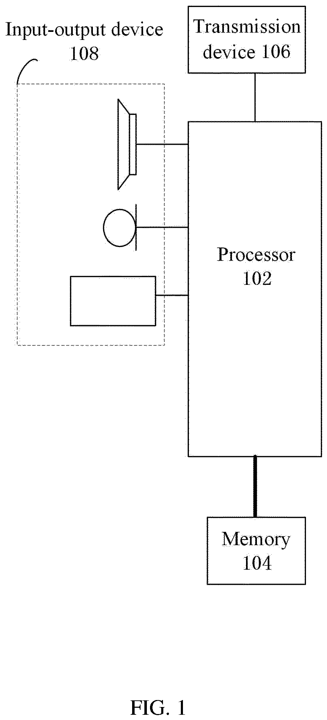

A method embodiment provided in Embodiment 1 of the present disclosure may be executed in a server, a network terminal, a computer terminal, or a similar computing device. Taking running on a network terminal as an example, FIG. 1 is a block diagram of a hardware structure of a load prediction network terminal based on a neural network according to an embodiment of the present disclosure. As shown in FIG. 1, a network terminal 10 may include one or more (only one is shown in FIG. 1) processors 102 (the processor 102 may include, but is not limited to, a processing device such as a microprocessor MCU or programmable logic device FPGA) and a memory 104 for storing data. Optionally, the network terminal may further include a transmission device 106 for a communication function and an input-output device 108. Those of ordinary skill in the art can understand that the structure shown in FIG. 1 is merely schematic, which does not limit the structure of the network terminal. For example, the network terminal 10 may further include more or fewer components than those shown in FIG. 1, or have a configuration different from that shown in FIG. 1.

The memory 104 may be configured to store computer programs, for example, software programs and modules for application software, and a computer program corresponding to the load prediction method based on a neural network in the embodiment of the present disclosure. The processor 102 runs the computer programs stored in the memory 104 to perform various functional applications and data processing, for example, implement the above method. The memory 104 may include a high-speed random access memory, and may further include a non-volatile memory, such as one or more magnetic storage devices, a flash memory, or other non-volatile solid-state memories. In other examples, the memory 104 may further include memories remotely disposed relative to the processor 102. The remote memories can be connected to the network terminal 10 via a network. Examples of the network include, but are not limited to, the Internet, an intranet, a local area network, a mobile communication network, and combinations thereof.

The transmission device 106 is configured to receive or send data via one network. Examples of the network may include a wireless network provided by a communication provider of the network terminal 10. In one example, the transmission device 106 includes a network interface controller (NIC), which may communicate with the Internet by connecting to other network devices via a base station. In one example, the transmission device 106 may be a radio frequency (RF) module, which is configured to communicate with the Internet wirelessly.

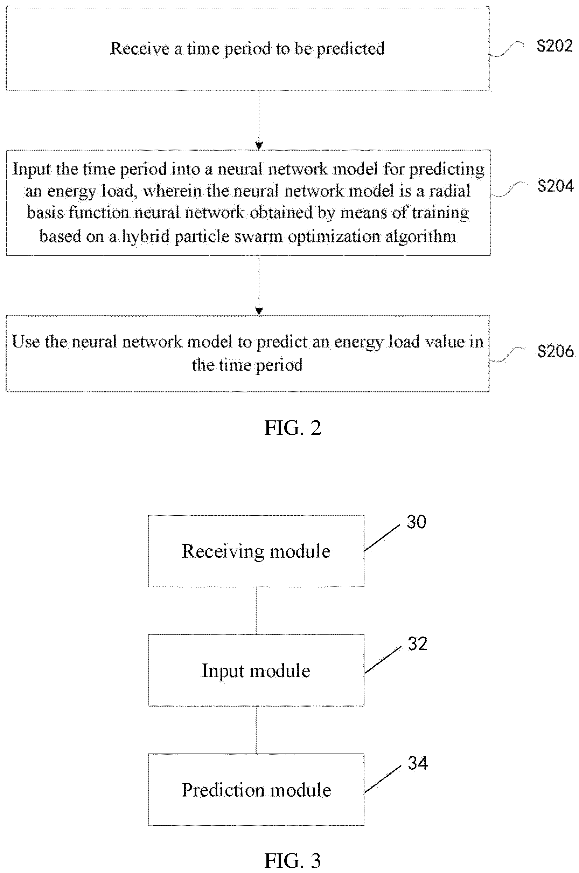

This embodiment provides a load prediction method based on a neural network. FIG. 2 is a flowchart of a load prediction method based on a neural network according to an embodiment of the present disclosure. As shown in FIG. 2, the process includes the following steps:

Step S202: Receive a time period to be predicted.

Step S204: Input the time period into a neural network model for predicting an energy load, wherein the neural network model is a radial basis function (RBF) neural network obtained by means of training based on a hybrid particle swarm optimization algorithm.

Step S206: Use the neural network model to predict an energy load value in the time period.

Through the above steps, a radial basis function neural network obtained by training based on a hybrid particle swarm optimization algorithm is used to predict an energy load value, and an optimal initial weight and offset of a neural network model are optimized by introducing a hybrid particle swarm and the radial basis function neural network that have the advantages of strong generalization capability and high network approximation accuracy, which solves the technical problem in the prior art of low accuracy when a single load prediction algorithm is used for predicting an energy load, reduces a prediction deviation, and improves the accuracy of energy load prediction.

Optionally, the above steps may be performed by a data processing device, a server, a terminal, or the like, which may specifically be a processor, an algorithm module, or the like, but is not limited thereto.

In terms of application scenarios, this embodiment is applicable to artificial intelligence scenarios such as energy prediction and flow prediction, and the energy may specifically be either thermal energy or consumable energy such as water, electricity and gas. The model of this embodiment is assumed as follows:

influences of weather, temperature, and start-stop state on load is not considered; and

load data is a time series, variable 1 is time (input), and variable 2 is a load value (output).

In this embodiment, before the time period is input into a neural network model for predicting an energy load, the neural network model further needs to be provided, including: acquiring the neural network model from a third party, for example, purchasing it from a supplier; and obtaining the neural network model by training sample data.

In an optional implementation of this embodiment, obtaining the neural network model by training sample data includes the following steps:

S11: Determine topology of an initial model, wherein the topology includes: an input layer, a hidden layer, and an output layer.

S12: Encode parameters of the initial model to obtain an initial particle population, wherein the parameters include: a center parameter of a radial basis function, a variance parameter, a weight parameter of the hidden layer, and a weight parameter of the output layer, each parameter is one particle, represented by an 8-bit binary code, and a random value in [-0.5, 0.5] is initialized. The parameters of the initial model are also called learning parameters.

S13: Decode the initial particle population to obtain initial parameters of the initial model.

S14: Assign the initial parameters to the initial model to obtain an RBF network model.

The RBF network model in this case is a primary network model, which can be further trained and optimized.

S15: Optimize the RBF network model by using a training sample and a test sample. The RBF network model is first trained with the training sample, and then tested with the test sample.

Weight values and offsets of a neural network algorithm are based on random initialization of random numbers in the interval [-0.5, 0.5]. The initialization parameters have great influences on network training. How to obtain or set these parameters properly and accurately is an implementation of this embodiment. In this embodiment, an optimal initial weight and offset are optimized by introducing a hybrid particle swarm and the radial basis function neural network that have the advantages of strong generalization capability and high network approximation accuracy.

Optionally, optimizing the RBF network model by using a training sample and a test sample includes: inputting the training sample and the test sample into the RBF network model respectively to obtain a test value and an expected value; selecting a norm of an error matrix consisting of the predicted value and the expected value as a fitness value; and updating particles in the population by using the fitness value.

In this embodiment, parameters involved in particle algorithm update are velocity, position, individual extremum, population extremum, etc. Updating particles in the population by using the fitness value includes the following steps:

S21: Update velocities and positions of the particles in the population.

In an optional implementation solution, updating velocities and positions of the particles in the population includes: iteratively updating the velocities and the positions of the particles in the population by using the following formulas:

$$V_{id}^{k+1} = wV_{id}^{k} + c_1 r_1 (P_{id}^{k} - X_{id}^{k}) + c_2 r_2 (P_{gd}^{k} - X_{id}^{k})$$ ;

$$X_{id}^{k+1} = X_{id}^{k} + V_{k+1,id}$$ ;

where $X_i = (x_{i1}, x_{i2}, \ldots \ldots x_{iD})$ denotes a population particle with D dimensions, $V_i = (v_{i1}, v_{i2}, \ldots \ldots v_{iD})$ denotes the velocity of a population particle with D dimension, $P_i = (p_{i1}, p_{i2}, \ldots \ldots p_{iD})$ denotes an extremum of an individual particle with D dimensions, $P_g = (p_{g1}, p_{g2}, \ldots \ldots p_{gD})$ denotes a population extremum with D dimensions, w is an inertia weight, d=1, 2, ... D, i=1, 2, ... n, k is a current iteration number, $V_{id}$ is a particle velocity, $c_1$ and $c_2$ are nonnegative constants and are acceleration factors, and ri and r2 are random numbers distributed in [0,1].

S22: Update an individual extremum of the particles in the population by using the fitness value, and update a population extremum of the particles in the population by using the fitness value.

Optimal crossover is carried out for individuals in the population, and individual particles are cross-updated with individual extremum particles. An integer crossover method is used as a crossover method. First, two crossover positions are selected, and then an individual and an individual extremum are crossed. An excellent individual strategy is retained for a new individual obtained, and the particle is updated only when a fitness value of the new particle is greater than that of an old particle. On the other hand, when the fitness value is used to update a population extremum of the particles in the population, the optimal crossover is carried out for the population. This step is similar to the eighth operation, except that the individual extremum is replaced with the population extremum.

S23: Mutate the particles in the population, and update the particles when a fitness value of a new particle is better than that of an old particle.

A mutation operation is performed on the particles in the population, and the mutation operation is carried out by using a two-digit interchange method within individuals. First, mutation positions pos1 and pos2 are randomly selected, and then the two mutation positions are interchanged. An excellent individual strategy is retained for a new particle obtained, and the particle is updated only when a fitness value of the new particle is better than that of an old particle.

After a new population is obtained, it is judged whether a termination condition is satisfied, for example, whether a maximum iteration number is reached, or whether an error less than a limit is satisfied.

In the actual operation, in order to verify an energy prediction model of this embodiment, thermal load predicted values of 30 days (there are 24 hours a day, each hour corresponds to a thermal load value, a total of 720 points are selected as experimental data, among which the data of 20 days is training set data, and the data of the last 10 days is test data set). A mean absolute percentage error (MAPE), a root mean square error (RMSE), and a deviation rate (DR) are selected as measurement indexes of experimental results.

MAPE:

$$MAPE = \frac{1}{n} \sum_{i=1}^{n} |(y_d(i) - y_t(i))/y_t(i)| \times 100\%$$

RMSE:

$$RMSE = \sqrt{\frac{1}{n} \sum_{i=1}^{n} (y_d(i) - y_t(i))^2}$$

DR:

$$DR = \frac{y_d - y_t}{y_t}$$

where $y_t$ represents a true value, $y_d$ represents a predicted value, and n represents a sample number.

Index data obtained is as shown in Table 1:

Table 1

| Evaluation index | Indexes of the algorithm in this embodiment | Indexes of the radial basis function neural network |
|---|---|---|
| RMSE | 0.78 | 1.23 |
| MAPE | 3.2% | 5.1% |
| DR | 6.7% | 9.2% |

As can be seen from the above data indexes, the algorithm model of this embodiment has an obvious effect, which is superior to the solution of adopting only the radial basis function neural network algorithm.

It should be noted that, for ease of description, the above method embodiments are all described as a series of action combinations. However, those skilled in the art should understand that the embodiments of the present disclosure are not limited to the described sequence of the actions, because some steps may be performed in another sequence or at the same time according to the embodiments of the present disclosure. In addition, those skilled in the art should also understand that the embodiments described in this specification all belong to preferred embodiments, and the involved actions and modules are not necessarily mandatory to the embodiments of the present disclosure.

Based on the above descriptions of the implementations, those skilled in the art may clearly understand that the methods according to the above embodiments may be implemented by software plus a necessary universal hardware platform, and certainly may also be implemented by hardware. However, in most cases, the former is better. Based on such understanding, the technical solution of the present disclosure essentially, or the portion contributing to the prior art may be embodied in the form of a software product. The computer software product may be stored in a storage medium, such as a ROM/RAM, a magnetic disk, or an optical disc, and include several instructions that enable a terminal device (which may be a mobile phone, a computer, a server, a network device, or the like) to execute the method in the embodiments of the present disclosure.

Embodiment 2

This embodiment further provides a load prediction apparatus based on a neural network. The apparatus is configured to implement the above embodiments and preferred implementations, and those described are not repeated. As used below, the term "module" can be a combination of software and/or hardware that implements a predetermined function. Although the apparatus described in the following embodiment is better implemented by software, the implementation by hardware or by a combination of software and hardware is also possible and envisaged.

FIG. 3 is a structural block diagram of a load prediction apparatus based on a neural network according to an embodiment of the present disclosure. As shown in FIG. 3, the apparatus includes:

a receiving module 30 configured to receive a time period to be predicted;
an input module 32 configured to input the time period into a neural network model for predicting an energy load, wherein the neural network model is a radial basis function (RBF) neural network obtained by means of training based on a hybrid particle swarm optimization algorithm; and
a prediction module 34 configured to use the neural network model to predict an energy load value in the time period.

Optionally, the apparatus further includes: a determination module configured to, before the input module inputs the time period into a neural network model for predicting an energy load, determine topology of an initial model, wherein the topology includes: an input layer, a hidden layer, and an output layer; an encoding module configured to encode parameters of the initial model to obtain an initial particle population, wherein the parameters include: a center parameter of a radial basis function, a variance parameter, a weight parameter of the hidden layer, and a weight parameter of the output layer, and each parameter is one particle; a decoding module configured to decode the initial particle population to obtain initial parameters of the initial model; an assignment module configured to assign the initial parameters to the initial model to obtain an RBF network model; and an optimization module configured to optimize the RBF network model by using a training sample and a test sample.

It should be noted that the modules can be implemented by software or hardware. The latter may be implemented in the following manner, but is not limited thereto: the modules are all located in the same processor; or the modules are combined arbitrarily to be located in different processors respectively.

Embodiment 3

An embodiment of the present disclosure further provides a storage medium, a computer program is stored in the storage medium, wherein the computer program is configured to perform, when run, steps in any one of the above method embodiments.

Optionally, in this embodiment, the storage medium may be configured to store a computer program for performing the following steps:

S1: Receive a time period to be predicted.
S2: Input the time period into a neural network model for predicting an energy load, wherein the neural network model is a radial basis function (RBF) neural network obtained by means of training based on a hybrid particle swarm optimization algorithm.
S3: Use the neural network model to predict an energy load value in the time period.

Optionally, in this embodiment, the storage medium may include, but is not limited to, various media that can store computer programs, such as a USB flash disk, a read-only memory (ROM), a random access memory (RAM), a mobile hard disk, a magnetic disk, or an optical disk.

An embodiment of the present disclosure further provides an electronic device, including a memory and a processor, wherein a computer program is stored in the storage medium, and the processor is configured to run the computer program to perform steps in any one of the above method embodiments.

Optionally, the electronic device may further include a transmission device and an input-output device, wherein the transmission device is connected to the processor, and the input-output device is connected to the process.

Optionally, in this embodiment, the processor may be configured to perform the following steps through the computer program:

S1: Receive a time period to be predicted.
S2: Input the time period into a neural network model for predicting an energy load, wherein the neural network model is a radial basis function (RBF) neural network obtained by means of training based on a hybrid particle swarm optimization algorithm.
S3: Use the neural network model to predict an energy load value in the time period.

Optionally, specific examples in this embodiment may be obtained with reference to the examples described in the above embodiments and optional implementations, which are not repeated herein in this embodiment.

Apparently, those skilled in the art should understand that the modules or steps in the present disclosure can be implemented by a general-purpose computing device, and they can be centralized on a single computing device or distributed over a network composed of a plurality of computing devices. Optionally, they can be implemented using program code executable by a computing device, so that they can be stored in a storage apparatus and executed by the computing device, and under some circumstances, the steps shown or described can be executed in a different order than here, or they can be made into individual integrated circuit modules, or they can be implemented by making a plurality of modules or steps of them into a single integrated circuit module. As such, the present disclosure is not limited to any particular combination of hardware and software.

The above are only preferred embodiments of the present disclosure and are not intended to limit the present disclosure. For those skilled in the art, the present disclosure can be subject to various changes and alterations. Any modification, equivalent replacement, improvement, and the like made within the principle of the present disclosure should all be encompassed in the protection scope of the present disclosure.

**Claims**

1.  A load prediction method based on a neural network, comprising:

    receiving a time period to be predicted;
    inputting the time period into a neural network model for predicting an energy load, wherein the neural network model is a radial basis function (RBF) neural network obtained by means of training based on a hybrid particle swarm optimization algorithm; and
    using the neural network model to predict an energy load value in the time period.

2.  The method according to claim 1, wherein before inputting the time period into a neural network model for predicting an energy load, the method further comprises:

    acquiring the neural network model from a third party; and

obtaining the neural network model by training sample data.

3. The method according to claim 2, wherein obtaining the neural network model by training sample data comprises:

determining topology of an initial model, wherein the topology comprises: an input layer, a hidden layer, and an output layer;
encoding parameters of the initial model to obtain an initial particle population, wherein the parameters comprise: a center parameter of a radial basis function, a variance parameter, a weight parameter of the hidden layer, and a weight parameter of the output layer, and each parameter is one particle;
decoding the initial particle population to obtain initial parameters of the initial model;
assigning the initial parameters to the initial model to obtain an RBF network model; and
optimizing the RBF network model by using a training sample and a test sample.

4. The method according to claim 3, wherein optimizing the RBF network model by using a training sample and a test sample comprises:

inputting the training sample and the test sample into the RBF network model respectively to obtain a test value and an expected value;
selecting a norm of an error matrix consisting of the predicted value and the expected value as a fitness value; and
updating particles in the population by using the fitness value.

5. The method according to claim 4, wherein updating particles in the population by using the fitness value comprises:

updating velocities and positions of the particles in the population;
updating an individual extremum of the particles in the population by using the fitness value, and updating a population extremum of the particles in the population by using the fitness value; and
mutating the particles in the population, and updating the particles when a fitness value of a new particle is better than that of an old particle.

6. The method according to claim 5, wherein updating velocities and positions of the particles in the population comprises:
iteratively updating the velocities and the positions of the particles in the population by using the following formulas:

$$V_{id}^{k+1} = wV_{id}^{k} + c_1 r_1 (P_{id}^{k} - X_{id}^{k}) + c_2 r_2 (P_{gd}^{k} - X_{id}^{k}) ;$$

$$X_{id}^{k+1} = X_{id}^{k} + V_{k+1,id} ;$$

where $X_i = (x_{i1}, x_{i2}, .........x_{iD})$ denotes a population particle with D dimensions, $V_i = (v_{i1}, v_{i2}, .....v_{iD})$ denotes the velocity of a population particle with D dimension, $P_i = (p_{i1}, p_{i2}, .......p_{iD})$ denotes an extremum of an individual particle with D dimensions, $P_g = (p_{g1}, p_{g2}, ......p_{gD})$ denotes a population extremum with D dimensions, w is an inertia weight, d=1, 2, ... D, i=1, 2, ... n, k is a current iteration number, $V_{id}$ is a particle velocity, $c_1$ and $c_2$ are nonnegative constants and are acceleration factors, and ri and r2 are random numbers distributed in [0,1].

7. A load prediction apparatus based on a neural network, comprising:

a receiving module configured to receive a time period to be predicted;
an input module configured to input the time period into a neural network model for predicting an energy load, wherein the neural network model is a radial basis function (RBF) neural network obtained by means of training based on a hybrid particle swarm optimization algorithm; and
a prediction module configured to use the neural network model to predict an energy load value in the time period.

8. The apparatus according to claim 7, wherein the apparatus further comprises:

a determination module configured to, before the input module inputs the time period into a neural network model for predicting an energy load, determine topology of an initial model, wherein the topology comprises: an input layer, a hidden layer, and an output layer;

an encoding module configured to encode parameters of the initial model to obtain an initial particle population, wherein the parameters comprise: a center parameter of a radial basis function, a variance parameter, a weight parameter of the hidden layer, and a weight parameter of the output layer, and each parameter is one particle;

a decoding module configured to decode the initial particle population to obtain initial parameters of the initial model;

an assignment module configured to assign the initial parameters to the initial model to obtain an RBF network model; and

an optimization module configured to optimize the RBF network model by using a training sample and a test sample.

9. A storage medium, wherein a computer program is stored in the storage medium, and the computer program is configured to perform, when run, the method according to any one of claims 1 to 6.

10. An electronic device, comprising a memory and a processor, wherein a computer program is stored in the storage medium, and the processor is configured to run the computer program to perform the method according to any one of claims 1 to 6.

Input-output device
108

Transmission
device 106

Processor
102

Memory
104

FIG. 1

Receive a time period to be predicted — S202

Input the time period into a neural network model for predicting an energy load, wherein the neural network model is a radial basis function neural network obtained by means of training based on a hybrid particle swarm optimization algorithm — S204

Use the neural network model to predict an energy load value in the time period — S206

FIG. 2

Receiving module 30

Input module 32

Prediction module 34

FIG. 3

## INTERNATIONAL SEARCH REPORT

| International application No. |
| --- |
| **PCT/CN2019/107945** |

| | |
| --- | --- |
| **A.** | **CLASSIFICATION OF SUBJECT MATTER** |
| | G06Q 10/04(2012.01)i |

According to International Patent Classification (IPC) or to both national classification and IPC

| | |
| --- | --- |
| **B.** | **FIELDS SEARCHED** |

Minimum documentation searched (classification system followed by classification symbols)

　　G06Q

Documentation searched other than minimum documentation to the extent that such documents are included in the fields searched

Electronic data base consulted during the international search (name of data base and, where practicable, search terms used)

　　CNPAT, CNKI, WPI, EPODOC: 神经网络, 负荷, 预测, 时间段, 混合, 粒子群, 径向基神经网络, RBF, neural network, load, forecast, time quantum, mix, particle, radial

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| PX | CN 109255498 A (XINZHI DIGITAL TECHNOLOGY CO., LTD.) 22 January 2019 (2019-01-22)<br>　　claims 1-10 | 1-10 |
| X | CN 103729685 A (NARI TECHNOLOGY DEVELOPMENT LIMITED COMPANY) 16 April 2014 (2014-04-16)<br>　　description, paragraphs [0006]-[0083], and figure 1 | 1-10 |
| A | CN 106920008 A (SHANDONG UNIVERSITY) 04 July 2017 (2017-07-04)<br>　　entire document | 1-10 |
| A | CN 101498457 A (HANGZHOU DIANZI UNIVERSITY) 05 August 2009 (2009-08-05)<br>　　entire document | 1-10 |
| A | US 2013110756 A1 (SIEMENS CORPORATION) 02 May 2013 (2013-05-02)<br>　　entire document | 1-10 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 December 2019** | **31 December 2019** |

| Name and mailing address of the ISA/CN | Authorized officer |
| --- | --- |
| **China National Intellectual Property Administration**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/107945**

| Patent document cited in search report | | | Publication date (day/month/year) | Patent family member(s) | | | Publication date (day/month/year) |
|---|---|---|---|---|---|---|---|
| CN | 109255498 | A | 22 January 2019 | None | | | |
| CN | 103729685 | A | 16 April 2014 | None | | | |
| CN | 106920008 | A | 04 July 2017 | None | | | |
| CN | 101498457 | A | 05 August 2009 | None | | | |
| US | 2013110756 | A1 | 02 May 2013 | WO | 2013066793 | A2 | 10 May 2013 |

Form PCT/ISA/210 (patent family annex) (January 2015)